# EUROPEAN PATENT APPLICATION

(11) **EP 1 876 756 A1**
(43) Date of publication of application: **09.01.2008**
(21) Application number: 06013982.1
(22) Date of filing: 06.07.2006
(51) Int. Cl.: H04L 12/26, H04L 12/24

(54) **Monitoring an MSTP network**

(71) Applicant: NOKIA SIEMENS NETWORKS GMBH & CO. KG, 81541 München (DE)
(72) Inventor: Redol, Joao, 1700-156 Lissabon (PT)
(74) Representative: Fischer, Michael

(57) **Abstract**

The present invention provides a method, a system and a computer program product for monitoring a network running MSTP protocol, comprising selecting one or more network regions (R1, R2) from a plurality of network elements (NE1, NE3, NE10); and monitoring network information of at least two MSTIs (MI0, MI1, MI2) of at least one of the network regions (R1, R2) by switching MSTI (MI0, MI1, MI2) within a same display of the network region (R2).

## Description

The present invention relates to a method according to the preamble of claim 1, to a system according the preamble of claim 4 and to a computer program product according to the preamble of claim 5.

in recent years, the fast growing of communications networks and the large amount of services over such networks have led to a remarkable growth in traffic and in the complexity of such communication networks.

In complex communications networks, network managers are faced with the challenge of being capable of defining and monitoring a huge amount of network relevant data in an efficient manner.

In order to define and control the parameters of their managed communication networks, a variety of network software management tools have been developed for network managers.

To facilitate the monitoring operations of the network managers, such network software management tools typically make use of Graphical User Interfaces (GUIs).

GUIs are essential for defining, understanding, exploring, monitoring and/or controlling network data, since they allow the network managers to visualize massive network and software-related data, while efficiently create, render and interact with complex geometric network objects.

Unfortunately, with the known monitoring techniques, not always is possible, for the network managers, to monitor network relevant data of large and complex networks, in an efficient and easy way.

In fact, nowadays communication networks often require a variety of protocols, running at the same time, and, as a consequence, network managers are required to monitor almost simultaneously different network protocols and their relevant parameters.

Some protocols are easy to be monitored since they are simple and require few parameters. As protocols get more complex, denser are their graphical representations. An example of a complex protocol running on current communication networks is Multiple Spanning Tree Protocol (MSTP).

A drawback of current methods for monitoring MSTP networks is that they do not enable, in a simple and quick manner, network managers to have an overall view.

In fact, in MSTP protocols various levels of information are defined, such as, for example, the MST Instances (MSTIs) that, in order to be monitored, require a GUI representation splitted in several contexts.

In current monitoring methods for MSTP networks, network managers when they want to see the different MSTIs of an MSTP network region are opening several networks and in each of the opened network are monitoring a specific different MSTI. Thus, network managers, in order to acquire the different information on MSTIs, need first to open the network and then, for each open network, they need to change the context.

Hence, current methods for monitoring MSTP networks have the drawback of being inefficient.
In fact, they require, when monitoring several MSTIs, an interruption of the network managers thinking flow. Moreover, the known methods cause a lost of focus for network managers thus increasing their required time in understanding the monitored information.

In addition, current methods for monitoring MSTP networks have the drawback of not being ergonomic and mistake prone. In fact, network managers are not able to monitor, with a minimized number of actions, several MSTIs in a network.

It is therefore aim of the present invention to overcome the above-mentioned drawbacks, in particular by providing a method, a system and a computer program product for monitoring a MSTP network which simplifies the monitoring of several MSTIs in a network.

The aforementioned aim is achieved by a method, a system and a computer program product for monitoring a network running MSTP protocol, the MSTP network comprising a plurality of network elements groupable in one or more network regions having several MSTIs, the invention comprising the steps of:
- selecting one or more network regions from the plurality of network elements; and
- monitoring network information of at least two of the MSTIs of at least one of the network regions by switching MSTI within a same display of the network region.

In the invention the switching may preferably be performed by a click or by typing a corresponding key on a keyboard.

In the invention the monitored network information may advantageously comprise active links and/or root network element of the selected MSTI over the selected network region.

The proposed invention enables network managers to monitor network information in an ergonomic way, by simply selecting the specific MSTI they desire to monitor within a given MSTP network.

The invention will now be described in preferred but not exclusive embodiments with reference to the accompanying drawings, wherein:
- Figure 1: is a block diagram illustrating a first specific MSTI monitored within a given MSTP region in an example embodiment according to the present invention;
- Figure 2: is a block diagram illustrating a second specific MSTI monitored within a given MSTP region in an example embodiment according to the present invention;
- Figure 3: is a block diagram illustrating a second specific MSTI monitored within a given MSTP region in an example embodiment according to the present invention.

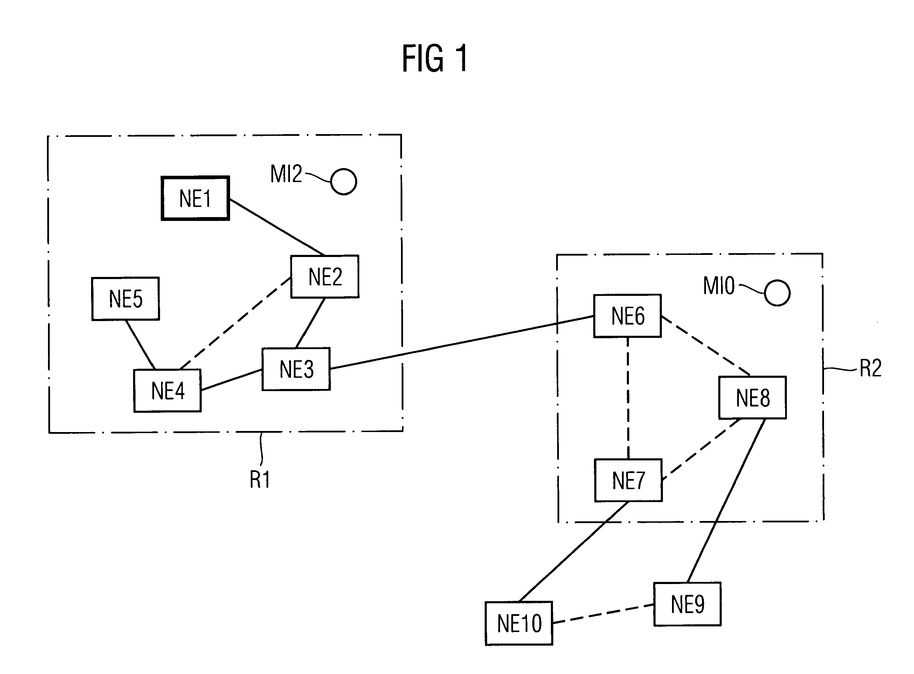

Figure 1, Figure 2 and Figure 3 show a plurality of network elements NE1, NE2,.., NE10 running the MSTP protocol within a communications network in an example embodiment according to the present invention.

A subset of the plurality of network elements, e.g. the first five network elements NE1,--,NE5, are grouped within a first network region R1. Another subset of the plurality of network elements, e.g. NE6, NE7, NE8, are grouped within a second network region R2. Each MSTP region has typically several MST Instances 0, 1 and 2 MI0, MI1, MI2.

Figure 1, Figure 2 and Figure 3 show respectively MSTI 0, MSTI 1 and MSTI 3 MI0, MI1, MI2 in the second network region R2, with its active and/or inactive links and, when existing, its root network element. Inactive links are denoted with dashed lines, active links are denoted with continuous lines and root network elements are represented by a thicker box.

According to the present invention, a network manager may select in a communications network one or more network regions R1, R2 each containing a group of network elements NE1,..,NE7. For example, the three figures show a first selected network region R1 on MSTI 2 MI2, thus enabling the network manager to monitor active and inactive links, to see the root network element NE1 on MSTI 2 MI2 of the first region R1. A network region may be a logical group or a geographical group of network elements NE1, NE3, NE5.

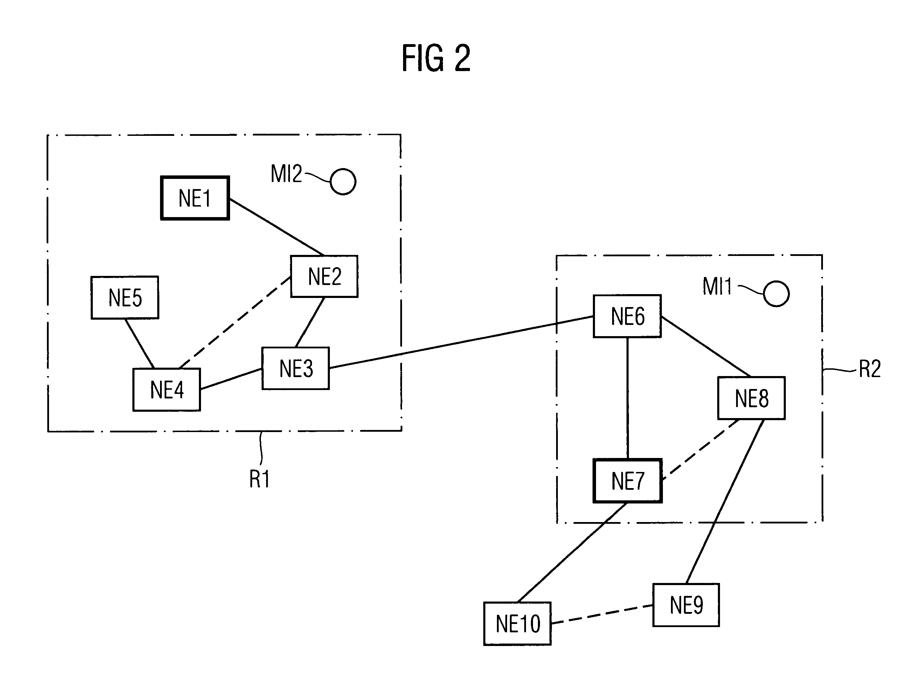

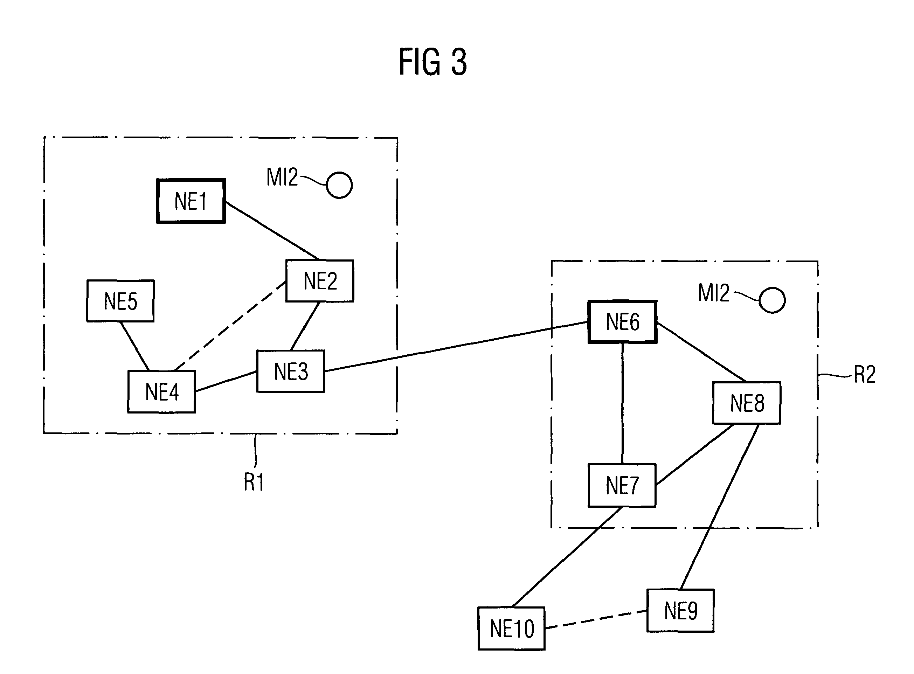

The network manager may switch, in a region R1, from a MSTI MI0 (see Figure 1) to another MSTI MI1, MI2 (see Figure 2 or 3) in order to monitor the network information, e.g. by viewing the relevant links and root elements.

The region containers R1, R2 may represent window or displays on a computer screen. The bullets denoted with MI0, MI1, MI2 may be arrow buttons, scrollable menus, text boxes or any mean enabling the user to switch from one MSTI to another MSTI in a quick way, by performing a single step.

In a further embodiment according to the present invention, the user can switch MSTIs within a specific selected region R1, R2 only by typing a key in a keyboard.

When the user switches MSTI, e.g. by clicking on an arrow button on the region R1 or by typing the relevant key in the keyboard, the newly selected MSTI is showed on the same region container R1. The user can conveniently switch back and forth among MSTIs MI0, MI1 MI2 in order to simply monitor the network information of different MSTIs of network regions R1, R2 in a sequential way.

Figures 1 to 3 show an example of switching MSTI context on the MSTP region container R1, thus enabling the region container R1 to act as multi context navigation window for MSTP protocol. Advantageously, the user does not need to monitor the different MSTIs from additional window pop-ups but sequentially within the same region display R1. Moreover, the user is able, in a convenient manner, to monitor the network information of the MSTIs MI0, MI1, MI2 over one selected network region R2 without require to change the MSTI MI0, MI1, MI2 over the other selected network regions R1.

| **List of reference signs** | |
|---|---|
| NE1, .. , NE10 | network elements |
| R1, R2 | network region, region |
| MI0, MI1, MI2 | MSTI instances |

| **List of used acronyms** | |
|---|---|
| GUI | Graphical user interface |
| MSTI | Multiple Spanning Tree Protocol Instance |
| MSTP | Multiple Spanning Tree Protocol |

## Claims

1. A method for monitoring a network running Multiple Spanning Tree Protocol, herein-after referred to as MTSP, said MSTP network comprising a plurality of network elements (NE1, NE3, NE10) groupable in one or more network regions (R1, R2) having several Multiple Spanning Tree Instances (MI0 MI1, MI2), herein-after referred to as MTSIs, said method comprising the steps of;
- selecting one or more network regions (R1, R2) from said plurality of network elements (NE1, NE3, NE10); and
- monitoring network information of at least two of the MSTIs (MI0, MI1, MI2) of at least one of said network regions (R1, R2) by switching MSTI (MIO, MI1, MI2) within a same display of the network region (R2).

2. The method according to claim 1, wherein said switching is performed by a click or by typing a corresponding key on a keyboard.

3. The method according to any of the preceding claims, wherein said monitored network information comprise active links and/or root network element of the selected MSTI (MIO, MI1, MI2) over the selected network region (R2).

4. A system having means for performing the steps of the method according to any of the claims 1 to 3.

5. A computer program product for performing steps of the method according to any of the claims 1 to 3.
